# EUROPÄISCHE PATENTSCHRIFT

(11) **EP 0 921 952 B1**
(45) Veröffentlichungstag und Bekanntmachung des Hinweises auf die Patenterteilung: **05.12.2001**
(21) Anmeldenummer: 97937475.8
(22) Anmeldetag: 12.07.1997
(51) Int. Cl.: B44B 5/00, B23Q 17/24, B23Q 17/09, B23Q 11/00, G01B 11/02, G01N 21/88

(54) **VORRICHTUNG UND VERFAHREN ZUR OPTISCHEN KONTROLLE EINER MIT EINEM TYPENRAD IN EIN WERKSTÜCK EINGEBRACHTEN PRÄGEMARKIERUNG MITTELS EINER KAMERA**
DEVICE AND METHOD FOR OPTICALLY CONTROLLING BY MEANS OF A CAMERA A MARK STAMPED ON A WORKPIECE BY MEANS OF A TYPE WHEEL
DISPOSITIF ET METHODE POUR LE CONTROLE OPTIQUE AU MOYEN D'UNE CAMERA D'UNE EMPREINTE FAITE SUR UNE PIECE AVEC UNE ROUE D'IMPRESSION

(30) Priorität: 03.08.1996 DE 19631506
(43) Veröffentlichungstag der Anmeldung: 16.06.1999
(73) Patentinhaber: Bayerische Motoren Werke Aktiengesellschaft, 80788 München (DE)
(72) Erfinder: GEIGER, Eduard, D-94469 Deggendorf (DE); BRAITMAYER, Dieter, D-80636 München (DE)
(86) Internationale Anmeldenummer: EP9703729
(87) Internationale Veröffentlichungsnummer: WO9805515

(56) Entgegenhaltungen:
- WO-A-94/26466
- US-A- 4 637 054
- US-A- 5 413 422

## Beschreibung

Die Erfindung bezieht sich auf eine Vorrichtung und ein Verfahren zur optischen Kontrolle der mit einem Typenrad in ein Werkstück eingebrachten Prägemarkierung mittels einer Kamera.

Es ist üblich, die Kontrolle der Prägemarkierung direkt vorzunehmen. Nach dem Prägevorgang wird die Prägemarkierung in das Blickfeld der Kamera gebracht und die Qualität des Prägevorgangs analysiert. Der Vorteil, die Qualität der Prägung unmittelbar bestimmen zu können, wird mit dem Nachteil erkauft, eine Fehlprägung erst nachträglich erkennen zu können. Auch ist es damit lediglich möglich, eine gegebenenfalls schlechte Qualität der Prägung zu erkennen und erst im nachhinein eine qualitätsverbessernde Massnahme einzuleiten. Eine falsche oder fehlerhafte Prägung erfordert zu ihrer Beseitigung bzw. Korrektur einen erheblichen Fertigungsaufwand, der den Herstellungspreis des Werkstücks belastet.

Bei einem Verfahren zur Prüfung von Werkstücken, die mit einem Werkzeug bearbeitet werden, ist es bekannt, das Bild des Werkzeugs vor und nach der Bearbeitung zueinander in Bezug zu setzen (US 4,637,054).

Der Erfindung liegt die Aufgabe zugrunde, eine Vorrichtung sowie ein Verfahren der eingangs Art zu schaffen, durch die sich Fehl- oder Falschprägungen vermeiden lassen.

Die Erfindung löst diese Aufgabe vorrichtungsmäßig mit den Merkmalen des Patentanspruchs 1 und verfahrensmäßig mit den Merkmalen des Patentanspruchs 2.

Im Gegensatz zum bekannten Verfahren wird nunmehr nicht das Werkstück mit seiner Prägemarkierung, sondern das Werkzeug (Typenrad) beobachtet. Erfolgt diese Beobachtung vor dem Prägevorgang, so lassen sich beispielsweise Verschmutzungen des Typenrads rechtzeitig erkennen und beseitigen noch bevor der Prägevorgang durchgeführt wird. Eine fehlerhafte Prägung läßt sich damit vermeiden.

Aufgrund des definierten Abstands der beobachteten Stelle vom Prägeort kann, vorzugsweise unter Verwendung einer Referenzliste festgestellt werden, ob das gewünschte Zeichen sich am Prägeort befindet. Nur dann ist auch das beobachtete Zeichen identisch mit dem, das sich aus der Referenzliste ergibt. Angenommen das zu prägende Zeichen sei der Buchstabe "A". Die Kamera sieht dann, wenn A tatsächlich am Prägeort steht, z.B. den Buchstaben "F". Wird tatsächlich F mit der Kamera aufgenommen, ist dies ein eindeutiger Beweis dafür, daß A am Prägeort steht und, ein fehlerfreies Prägewerkzeug vorausgesetzt, auch geprägt wird.

Aber auch wenn die Beobachtung des Werkzeugs nach dem Prägevorgang erfolgt, läßt sich anhand der Qualität des Werkzeugs ein sicherer Rückschluß ziehen, ob der Prägevorgang mit ausreichender Genauigkeit durchgeführt wurde.

In jedem Fall bedeutet die Beobachtung des Werkzeugs einen erheblichen Qualitätsgewinn bezüglich der Aussage, ob die Prägemarkierung eine hinreichende Qualität besitzt.

Die bekannte optische Beobachtung der Prägemarkierung selbst nach der Durchführung des Prägevorgangs erfolgt in der Regel unter Beobachtungs- und Beleuchtungsverhältnissen, die starken Schwankungen unterworfen sind und die beispielsweise auch von der Art des einzelnen Prägezeichens abhängen. Beobachtet man hingegen das Prägewerkzeug, so kann dies unter optischen Verhältnissen vorgenommen werden, die optimal gewählt werden können und die unabhängig von der Art des jeweiligen Prägezeichens gute Ergebnisse liefern. -Die Zeichen des Typenrads haben eine gleichbleibende, scharf abgegrenzte und gleichmäßig tiefe Kontur. Die Auswertung über Graustufen ist für die Zeichen des Typenrads wesentlich einfacher, zuverlässiger und schneller. Stillstandszeiten des Werkstücks infolge einer nicht eindeutig identifizierten Prägemarkierung können dann ebenfalls entfallen. Dies ist besonders dann von Bedeutung, wenn der Prägevorgang in einer Fertigungslinie ohne ausreichenden Puffer erfolgt.

Eine weitere Qualitätsverbesserung des erfindungsgemäßen Verfahrens läßt sich dann erzielen, wenn das Typenrad während der Totzeit, d. h. während des Wechsels der Werkstücke, sukzessive mit der Kamera aufgenommen wird. Anomalien des Typenrads können so auch dann erfaßt werden, wenn sie bei der anstehenden bzw. vorausgehenden Prägung nicht in Erscheinung treten, weil beispielsweise das jeweilige Zeichen bei dieser Prägung nicht verwendet wird.

Die Erfindung ist anhand eines in der Zeichnung dargestellten Ausführungsbeispiel weiter erläutert. Es zeigt
- Fig. 1: schematisch eine erfindungsgemäße Vorrichtung zur Durchführung des erfindungsgemäßen Verfahrens und
- Fig. 2: die Vorrichtung von Fig.1 in der Seitenansicht, d. h. gegenüber der Darstellung von Fig. 1 um 90° gedreht.

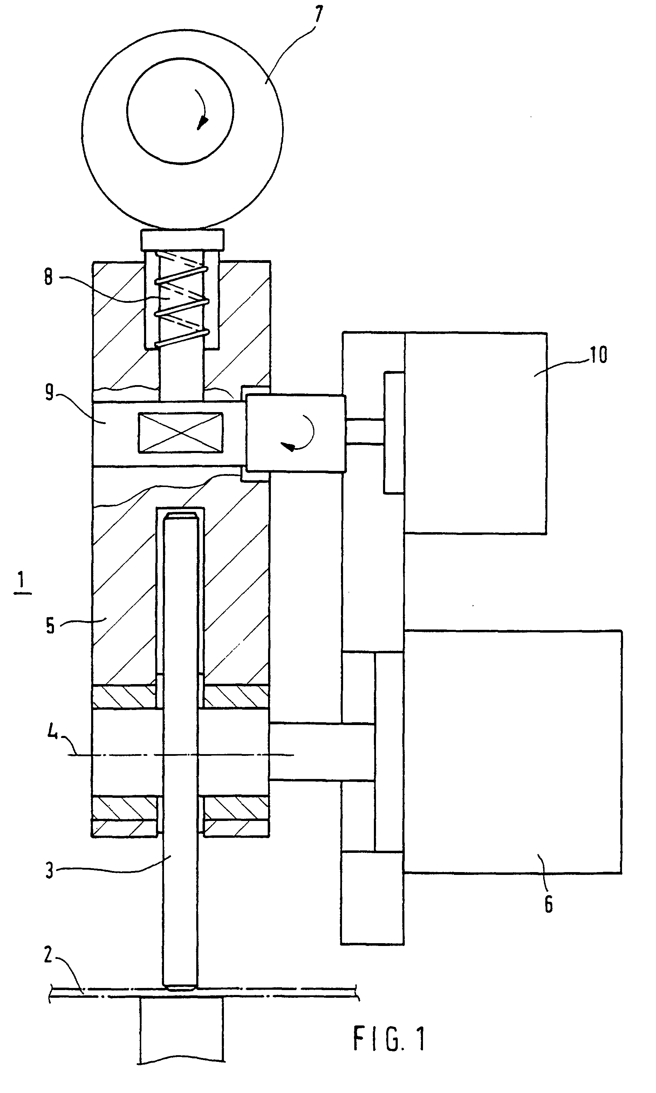

Das in Fig. 1 gezeigte Prägewerkzeug 1 dient dazu, in einem Werkstück 2 (z. B. einem Blechteil) eine Prägemarkierung, beispielsweise in Form einer mehrstelligen Zahl einzuprägen. Hierzu dient ein Typenrad 3 als Teil des Werkzeugs 1, das mit einer Drehachse 4 in einem Halter 5 drehbeweglich gelagert ist und das durch einen Positionierantrieb 6 bezüglich des Werkstücks 2 ausgerichtet wird. Die Prägemarkierungen, hier die einzelnen Ziffern der zu prägenden Zahl, werden nacheinander der entsprechenden Stelle des Werkstücks 2 gegenübergestellt.

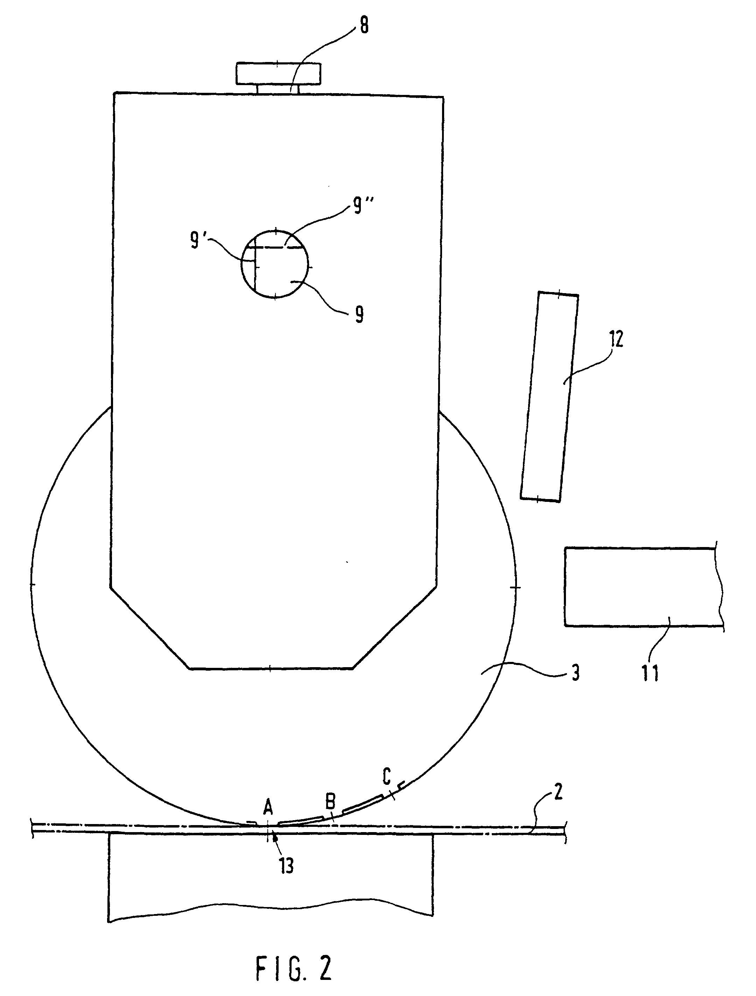

Zum Durchführen des Prägevorgangs wird der Halter 5 durch einen kontinuierlich drehenden Prägeexzenter 7 ein- oder mehrmals mit hohem Druck auf das Werkstück 2 gepreßt. Die mechanische Verbindung zwischen dem Prägeexzenter 7 und dem Halter 5 erfolgt über einen Stößel 8 sowie ein Koppelelement 9, das durch einen Drehmagneten 10 zwischen seinen beiden Endlagen verschwenkt wird. In der einen Endlage, die auch in Fig. 2 dargestellt ist, stellt das Koppelelement 9 die mechanische Verbindung zwischen dem Stößel 8 und dem Halter 5 her. In der anderen Einstellung, in der das Koppelelement 9 um 90° geschwenkt ist und bei der die strichliert eingezeichnete Abschrägung 9' die eingezeichnete Lage 9" besitzt, besteht keine mechanische Verbindung zwischen dem Prägeexzenter 7 bzw. dem Stössel 8 und dem Halter 5. Der Prägeexzenter 7 wirkt dann nicht auf das Typenrad 3.

Zur Qualitätskontrolle der mit dem Typenrad 3 vorgenommenen Markierungen ist, wie in Fig. 2 gezeigt, eine Kamera 11 mit zugehöriger Beleuchtung 12 auf eine Stelle des Typenrads 3 ausgerichtet, die gegenüber der Prägestelle 13 um 90° gedreht ist. Das mit der Kamera beobachtete Zeichen korreliert aufgrund der Lagebeziehung mit zu prägenden Zeichen. Wird das richtige entsprechende Zeichen vor und/oder während des Prägevorgangs beobachtet, befindet sich auch das richtige zu prägende Zeichen am Prägeort. So kann ohne direkte Beobachtung des zu prägenden Zeichens oder des Prägeorts eine eindeutige Qualitätsaussage über den Prägevorgang geliefert werden.

Ergänzend kann vor der Einprägung des an der mit A bezeichneten Stelle des Typenrads befindlichen Zeichens in das Werkstück 2 die Stelle A in das Blickfeld der Kamera 11 gedreht werden. Unter optimalen optischen Verhältnissen kann mit Hilfe der Kamera 11 erkannt werden, ob das Zeichen in Ordnung ist. Ist dies der Fall, so wird das Typenrad 3 in die eingezeichnete Lage geschwenkt und das Werkstück 2 mit *dem* an der Stelle A befindlichen *Zeichen* versehen. Entsprechendes gilt für die weiteren, beispielsweise an den Stellen B und C vorhandenen *Zeichen,* die in entsprechender Weise vor dem Prägevorgang mit der Kamera 11 aufgenommen und in einem nachgeschalteten Bildverarbeitungsprogramm auf eventuelle Fehler untersucht werden. Gegebenenfalls wird in bekannter Weise eine Fehlermeldung ausgegeben und eine Reparatur des Werkzeugs 1 und/oder eine Nachbehandlung *des eingeprägten Zeichens* auf dem Werkstück 2 veranlasst.

Die Untersuchung der *Zeichen an den Stellen* A, B, C, ... mit Hilfe der Kamera 11 kann auch ergänzend oder alternativ nach der Durchführung des Prägevorgangs erfolgen. Auf diese Weise können während des Prägevorgangs beschädigte bzw. verschmutzte Zeichen des Typenrads erkannt werden. Dies ist beispielsweise dann wichtig, wenn ein mit einem Lacküberzug versehenes Werkstück geprägt wird. Dabei können sich Farbreste in den Zeichen des Typenrads festsetzen.

Ergänzend kann das Typenrad während eines Werkstückwechsels sukzessive und vollständig mit Hilfe der Kamera 11 untersucht werden. Gegebenenfalls kann diese Prüfung ausreichen, eine Qualitätsaussage für einen aus mehreren Einzelprägungen bestehenden Prägevorgang ohne zwischenzeitliche Kontrolle des individuellen Prägezeichens zu liefern.

## Patentansprüche

1. Vorrichtung zur optischen Kontrolle einer mit einem Typenrad (3) in ein Werkstück (2) eingebrachten Prägemarkierung mittels einer Kamera (11), **dadurch gekennzeichnet, dass** die Kamera (11) auf eine mit einem Zeichen versehene Stelle des Typenrads (3) ausgerichtet ist, die sich in einem definierten Abstand von 90° vom Prägeort (13) befindet und deren Zeichen aufgrund der Lagebeziehung mit dem zu prägenden Zeichen (A) korreliert und dass sich diese Stelle des Typenrads vor und/oder während und/oder nach dem Prägevorgang im Blickfeld der Kamera befindet.

2. Verfahren zur optischen Kontrolle einer mit einem Typenrad (3) in ein Werkstück (2) eingebrachten Prägemarkierung mittels einer Kamera (11), **gekennzeichnet durch** folgenden Ablauf: vor und/oder während und/oder nach dem Prägevorgang wird das Typenrad (3) in das Blickfeld der Kamera (11) gebracht und eine Fehleranzeige wird ausgegeben, wenn die beobachtete und mit einem Zeichen versehene Stelle des Typenrads, deren Zeichen aufgrund der Lagebeziehung mit dem zu prägenden Zeichen (A) korreliert, eine Anomalie aufweist.

3. Verfahren nach Anspruch 2, **dadurch gekennzeichnet, dass** das gesamte Typenrad (3) in der Totzeit sukzessive in das Blickfeld der Kamera (11) geschwenkt wird.

## Claims

1. A device whereby marks stamped on a workpiece (2) by a print wheel (3) are optically checked by means of a camera (11), **characterised in that** the camera (11) is pointed towards a place on the print wheel (3) bearing a symbol and at a defined distance of 90° from the stamping place (13) and the symbol, on the basis of its position, is correlated with the symbol (A) for stamping and the said place on the print wheel is in the field of vision of the camera before and/or during and/or after the stamping operation.

2. A method whereby marks stamped on a workpiece (2) by a print wheel (3) are optically checked by means of a camera (11), **characterised by** the following sequence: before and/or during and/or after the stamping operation the print wheel (3) is brought into the field of vision of the camera (11) and an error report is output if there is an irregularity in the observed place on the print wheel bearing a symbol which with regard to its position is correlated with the symbol (A) for stamping.

3. A method according to claim 2, **characterised in that** the entire print wheel (3) is successively rotated into the field of vision of the camera (11) during the idle time.

## Revendications

1. Dispositif de contrôle optique d'une empreinte de marquage réalisée à l'aide d'une roue d'impression (3) dans une pièce (2) à l'aide d'une caméra (11),
**caractérisé en ce que**
la caméra (11) est alignée sur un endroit de la roue d'impression (3) munie d'un signe, celle-ci se trouve à une distance déterminée de 90° par rapport à l'emplacement de l'empreinte (13) et ses signes sont mis en corrélation avec le signe à imprimer (A) par rapport à la position et cet emplacement de la roue d'impression avant et/ou pendant et/ou après la réalisation de l'empreinte se trouve dans le champ de la caméra.

2. Procédé de contrôle optique d'une empreinte réalisée à l'aide d'une roue d'impression (3) dans une pièce (2) à l'aide d'une caméra (11),
**caractérisé en ce que**
- avant et/ou pendant et/ou après la réalisation de l'empreinte on place la roue d'impression (3) dans le champ de visée de la caméra (11) et on émet un signal de défaut si l'emplacement observé et comportant un signe de la roue d'impression, dont les signes sont mis en corrélation avec le signe (A) à imprimer du fait de la relation de position, présente une anomalie.

3. Procédé selon la revendication 2,
**caractérisé en ce que**
l'ensemble de la roue d'impression (3) est basculé dans le temps mort, successivement dans le champ de visée de la caméra (11).
